# EUROPÄISCHE PATENTANMELDUNG

(11) **EP 4 169 609 A1**
(43) Veröffentlichungstag der Anmeldung: **26.04.2023**
(21) Anmeldenummer: 22202052.1
(22) Anmeldetag: 18.10.2022
(51) Int. Cl.: B01J 3/02, B01J 3/03, B01J 3/00, B01J 3/04, B29B 7/10, B29B 7/22, B29B 7/28

(54) **DRUCKBEHÄLTER MIT RÜCKSCHLAGVENTIL**

(30) Priorität: 21.10.2021 DE 202021105752 U
(71) Anmelder: MLS Mikrowellen-Labor-Systeme GmbH, 88299 Leutkirch (DE)
(72) Erfinder: Werner, LAUTENSCHLÄGER, 88299 Leutkirch (DE)
(74) Vertreter: Kiwit, Benedikt

(57) **Zusammenfassung**

Die vorliegende Erfindung betrifft einen Druckbehälter (1, 1'), aufweisend ein Unterteil (20) und einen Deckel (24), die miteinander verschließbar sind, um im miteinander verschlossenen Zustand eine Reaktionskammer (22) als Druckraum zum Auslösen und/oder Fördern chemischer und/oder physikalischer Druckreaktionen von in der Reaktionskammer (22) aufgenommenen Proben (P) allseitig zu umgeben, und einen Fluid-Einlass (FE) mit einem Rückschlagventil (4) zum Zuführen eines Fluids in die Reaktionskammer (22), wobei das Rückschlagventil (4) sich zumindest teilweise in dem Deckel (24) erstreckt.

## Beschreibung

Die Erfindung betrifft einen Druckbehälter, aufweisend ein Unterteil und einen Deckel, die miteinander verschließbar sind, um im miteinander verschlossenen Zustand eine Reaktionskammer als Druckraum zum Auslösen und/oder Fördern chemischer und/oder physikalischer Druckreaktionen von in der Reaktionskammer aufgenommenen Proben allseitig zu umgeben.

Eingangs genannte Druckbehälter kommen vor allem zur Analyse (Spurenanalyse etc.) von Proben zur Anwendung. Hierbei ist es insbesondere erforderlich, ein Fluid wie beispielsweise ein Ladegas der Reaktionskammer zuzuführen. Ein Problem dabei ist, dass durch die Zuführung des Fluids Verunreinigungen wie beispielsweise Metallspuren in die Reaktionskammer eingebracht und damit Analyseergebnisse verfälscht werden.

Es ist somit eine Aufgabe der Erfindung, einen Druckbehälter der eingangs genannten Art bereitzustellen, welcher die Einbringung von unerwünschten Verunreinigungen reduziert.

Die Aufgabe wird erfindungsgemäß durch die Merkmale des unabhängigen Anspruchs gelöst. Vorteilhafte Weiterbildungen sind Gegenstand der hierauf rückbezogenen Unteransprüche.

Ein erfindungsgemäßer Druckbehälter weist auf: ein Unterteil und einen Deckel, die miteinander verschließbar sind, um im miteinander verschlossenen Zustand eine Reaktionskammer als Druckraum zum Auslösen und/oder Fördern chemischer und/oder physikalischer Druckreaktionen von in der Reaktionskammer aufgenommenen Proben allseitig zu umgeben; und einen Fluid-Einlass mit einem Rückschlagventil zum Zuführen eines Fluids in die Reaktionskammer, wobei das Rückschlagventil sich zumindest teilweise in dem Deckel - also in der Deckelwand - erstreckt.

Das Rückschlagventil wird folglich direkt in dem Deckel bzw. der Deckelwand und nicht in davon beabstandeten Bereichen des Druckbehälters (wie bspw. einer von dem Deckel wegführenden Zuführleitung, welche separat bereitgestellt oder integral mit dem Deckel ausgebildet sein kann) vorgesehen. Durch derartiges Unterbringen des Rückschlagventils in dem Deckel wird der Weg zwischen dem Rückschlagventil und der Reaktionskammer erheblich verkürzt. Dadurch wird vorteilhaft verhindert, dass in dem Fluid-Einlass befindliche Verunreinigungen der Reaktionskammer zugeführt werden. Mit anderen Worten kann durch das erfindungsgemäße Vorsehen des Rückschlagventils der Abschnitt des Fluids-Einlasses stromabwärts des Rückschlagventils auf ein Minimum reduziert werden oder sogar komplett entfallen. Dadurch kann beispielsweise verhindert werden, dass Substanzen aus der Reaktionskammer in den Fluid-Einlass gelangen und sich dort als Verunreinigungen für eine darauffolgende Druckreaktion ablagern. Denn das Rückschlagventil lässt eine Strömung nur von dem Fluid-Einlass in die Reaktionskammer zu, eine Strömung von der Reaktionskammer in den Fluid-Einlass ist dagegen durch das Rückschlagventil und dessen teilweise Vorsehen in dem Deckel verhindert. Folglich wird vorteilhaft erzielt, dass weniger Verunreinigungen in die Reaktionskammer eingebracht werden, wodurch die Analyse verbessert ist.

Der Fluid-Einlass ist vorzugsweise vorgesehen, um die Reaktionskammer unter Druck zu setzen und/oder zu spülen. Bevorzugt ist, wenn der Druck des Fluids stromaufwärts des Rückschlagventils (Ladedruck) in einem Bereich von etwa 5 bis 100 bar, vorzugsweise von 30 bis 80 bar, weiter vorzugsweise von 40 bis 70 bar liegt. Der Druckbehälter kann eingerichtet sein, den Ladedruck je nach Anforderung einzustellen.

Der Fluid-Einlass kann stromaufwärts des Rückschlagventils ein Zuführventil aufweisen, das zwischen einer Offenstellung zum Zuführen des Fluids in die Reaktionskammer und einer Schließstellung zum Stoppen des Zuführens des Fluids verstellbar ist. Über das Zuführventil kann somit die Zuführung des Fluids in die Reaktionskammer geregelt werden, um beispielsweise die Reaktionskammer zu spülen und/oder unter Druck zu setzen. Das Rückschlagventil ist dabei bevorzugt entlang des Strömungspfades von dem Zuführventil beabstandet, wodurch die in die Reaktionskammer eingebrachten Verunreinigungen weiter reduziert werden können.

Der Fluid-Einlass kann stromaufwärts des Rückschlagventils einen Pufferbehälter aufweisen. Der Pufferbehälter kann einen bestimmten Druck bewirken, beispielsweise im Bereich von 50 bis 70 bar, vorzugsweise 60 bar. Der Pufferbehälter hat vorzugsweise ein Volumen von 0,5 bis 5 Liter. Der Fluid-Einlass kann den Pufferbehälter mit dem Zuführventil und ohne das Zuführventil aufweisen. Vorzugsweise weist der Fluid-Einlass stromaufwärts des Pufferbehälters ein weiteres Rückschlagventil auf. Vorzugsweise weist der Fluid-Einlass stromaufwärts des weiteren Rückschlagventils einen Verdichter wie beispielsweise einen Kompressor auf. Das weitere Rückschlagventil ist dann so vorgesehen, dass es eine Strömung nur in Richtung von dem Verdichter in den Pufferbehälter zulässt.

Der Fluid-Einlass kann eine Fluidleitung (zum Beispiel ein Rohr) mit einem stromabwärtigen Ende aufweisen, an dem das Rückschlagventil vorgesehen und vorzugsweise befestigt ist. Mit anderen Worten ist stromabwärts des Rückschlagventils ein Abschnitt der Fluidleitung nicht vorhanden. Dadurch können die von dem Fluid-Einlass in die Reaktionskammer eingebrachten Verunreinigungen weiter reduziert werden. Die Fluidleitung kann ferner ein stromaufwärtiges Ende aufweisen, an dem das Zuführventil vorgesehen und vorzugsweise befestigt ist. Anders gesagt kann sich die Fluidleitung nur zwischen Zuführventil und Rückschlagventil erstrecken.

Der Deckel kann eine Durchgangsöffnung (beispielsweise als Durchgangsbohrung) aufweisen, in der das Rückschlagventil aufgenommen und/oder befestigt ist. Dadurch kann das Rückschlagventil sehr einfach an dem Deckel vorgesehen, beispielsweise montiert werden. Die Befestigung erfolgt dabei vorzugsweise über Kraft-und/oder Formschluss, beispielsweise über eine Schraubverbindung.

Die Durchgangsöffnung des Deckels kann eine Stufe aufweisen, auf der das Rückschlagventil direkt oder indirekt aufliegt. Dadurch ergibt sich ein besonders sicherer Sitz des Rückschlagventils in dem Deckel. Über die indirekte Auflage des Rückschlagventils auf der Stufe kann beispielsweise eine Dichtung bereitgestellt werden. Dadurch wird vorteilhaft verhindert, dass ein Fluid aus der Reaktionskammer über einen zwischen dem Deckel und dem Rückschlagventil befindlichen Spalt der Reaktionskammer entweichen kann. Die indirekte Auflage kann also beispielsweise über ein separat bereitgestelltes Dichtungselement erfolgen.

Das Rückschlagventil kann ein Schließelement und ein Gehäuse aufweisen, wobei das Gehäuse einen Dichtungssitz mit einer Öffnung aufweist, die durch das Schließelement verschließbar ist. Bei einer Strömung von dem Fluid-Einlass in die Reaktionskammer ist das Schließelement folglich von dem Dichtungssitz beabstandet und gibt dadurch die Öffnung frei. Das Fluid wird dann über die so freigegebene Öffnung der Reaktionskammer zugeführt. Besteht jedoch ein Druckgefälle von der Reaktionskammer in den Fluid-Einlass, wird das Schließelement gegen den Dichtungssitz gedrückt, wodurch die Öffnung geschlossen wird. Folglich wird eine Strömung nur in Richtung von der Öffnung in die Reaktionskammer zugelassen, nicht jedoch in der entgegengesetzten Richtung.

Das Gehäuse des Rückschlagventils ist dabei derart vorgesehen, dass das Gehäuse sich zumindest teilweise in dem Deckel - also in der Deckelwand -, beispielsweise in dessen Durchgangsöffnung, erstreckt. Dadurch ist der Weg zwischen Rückschlagventil und Reaktionskammer besonders kurz und der Eintrag von Verunreinigungen in die Reaktionskammer besonders gering. Außerdem ergibt sich durch ein derartiges Vorsehen des Gehäuses in dem Deckel eine kompakte Anordnung.

Der Dichtungssitz kann innerhalb des Deckels vorgesehen sein. Dadurch ist ein besonders kurzer Weg zwischen Rückschlagventil und Reaktionskammer und damit auch ein besonders geringer Eintrag von Verunreinigungen in die Reaktionskammer bereitgestellt. Alternativ oder zusätzlich kann der Dichtungssitz außerhalb des Deckels vorgesehen sein. Dadurch kann das Rückschlagventil von dem Deckel vorteilhaft hervorstehen, was beispielsweise für eine einfache Montage des Rückschlagventils von Vorteil sein kann. Das Gehäuse kann an dem Deckel befestigt sein, beispielsweise über Form-und/oder Kraftschluss, vorzugsweise über eine Schraubverbindung. Das heißt, das Gehäuse kann beispielsweise ein Gewinde aufweisen, über das das Gehäuse in den Deckel einschraubbar ist. Es kann jedoch auch vorgesehen sein, dass das Gehäuse über sonstige Befestigungsmittel (Klemme, Passung, Stift etc.) an dem Deckel befestigt ist.

Das Schließelement kann zumindest teilweise kugelförmig ausgebildet sein. Alternativ oder zusätzlich kann das Schließelement zumindest teilweise kegelförmig ausgebildet sein.

Das Rückschlagventil kann ein elastisches Element wie beispielsweise eine Feder aufweisen, das derart angeordnet ist, dass dessen Rückstellkraft das Schließelement in Richtung des Dichtungssitzes spannt oder drückt. Die Öffnung wird also in eine Richtung durch das elastische Element geschlossen, in einer dieser Richtung entgegengesetzten Richtung dagegen vom Druck des über den Fluid-Einlass der Reaktionskammer strömenden Fluids freigegeben. Vor allem kann das elastisches Element so ausgebildet sein, dass dieses die Öffnung erst freigibt, sobald das Fluid stromaufwärts des Rückschlagventils einen bestimmten Druck übersteigt.

Das Rückschlagventil kann optional weitere Komponenten aufweisen, beispielsweise ein oder mehrere Dichtelemente oder -ringe. Die weiteren Komponenten können vorgesehen sein, den Eintrag von Verunreinigungen noch weiter zu reduzieren.

Der Druckbehälter kann ferner eine stromabwärts des Rückschlagventils und des Deckels vorgesehenen weiteren Deckel aufweisen, der eine (weitere) Durchgangsöffnung (beispielsweise als Durchgangsbohrung) aufweist, über die das aus dem Rückschlagventil strömende Fluid in die Reaktionskammer zuführbar ist. Der weitere Deckel dient beispielsweise als Auskleidung einer Fläche des Deckels, die der Reaktionskammer zugewandt ist. Der weitere Deckel dient beispielsweise als Schutz für den Deckel, beispielsweise als Schutz vor Chemikalien. Vorzugsweise ist der weitere Deckel zumindest teilweise aus Kunststoff wie beispielsweise PTFE hergestellt.

Der Druckbehälter kann ferner einen in dem Unterteil vorgesehenen Mantel aufweisen, der die Reaktionskammer zumindest teilweise begrenzt. Der Mantel kann insbesondere so vorgesehen sein, dass dieser aus dem Unterteil einfach entnommen werden kann, beispielsweise für eine Reinigung. Außerdem kann der Mantel als Auskleidung des Unterteils dienen, um dieses vor chemischen und/oder physikalischen Einflüssen während einer Druckreaktion zu schützen. Der Mantel ist vorzugsweise zumindest teilweise aus Kunststoff wie beispielsweise PTFE hergestellt.

Der Druckbehälter kann ferner eine stromabwärts des Rückschlagventils vorgesehene Leitung aufweisen, über die das aus dem Rückschlagventil strömende Fluid in die Reaktionskammer zuführbar ist. Durch diese Leitung kann insbesondere der Eintrag von Verunreinigungen in die Reaktionskammer weiter reduziert werden. Denn die Leitung kann vorteilhaft hindern, dass Verunreinigungen sich stromabwärts des Rückschlagventils anreichern. Zum Beispiel dient die Leitung als Dichtung.

Bevorzugt ist, wenn das Rückschlagventil sich auf der Leitung abstützt. Durch eine solche Abstützung kann zum Beispiel eine Dichtungswirkung zwischen Rückschlagventil und Leitung bereitgestellt werden. Dadurch wird vorteilhaft verhindert, dass Verunreinigungen über einen Bereich zwischen Rückschlagventil und Leitung in die Reaktionskammer eingebracht werden. Vorzugsweise stützt sich das Rückschlagventil direkt auf der Leitung, beispielsweise auf einem Flanschbereich derselben, ab. Dadurch kann eine Dichtungswirkung zwischen Rückschlagventil und Leitung ohne zusätzliches Dichtelement bereitgestellt werden.

Die Leitung kann sich in den Deckel erstrecken und ist vorzugsweise zumindest teilweise in der Durchgangsöffnung des Deckels vorgesehen. Dadurch kann mittels der Leitung der Eintrag von Verunreinigungen über einen Bereich zwischen dem Rückschlagventil und dem Deckel vorteilhaft verhindert werden.

Die Leitung kann sich in die Reaktionskammer erstrecken. Dies bringt den Vorteil, dass das Fluid nach Austritt der Leitung direkt in die Reaktionskammer strömt und dadurch weniger Verunreinigungen in die Reaktionskammer eingebracht werden.

Die Leitung kann sich in dem weiteren Deckel erstrecken und/oder zumindest teilweise in der Durchgangsöffnung des weiteren Deckels vorgesehen sein. Dadurch wird mittels der Leitung der Eintrag von Verunreinigungen über einen Bereich zwischen dem Rückschlagventil und dem weiteren Deckel vorteilhaft verhindert. Bevorzugt ist, wenn die Leitung sich vorzugsweise nicht in den Deckel erstreckt, also sich beispielsweise nur in dem weiteren Deckel und, optional, in der Reaktionskammer erstreckt.

Die Leitung weist vorzugsweise einen Flanschbereich auf, über den die Leitung aufgenommen ist, beispielsweise indem der Flanschbereich in dem Deckel, insbesondere in dessen Durchgangsöffnung oder auf der Stufe der Durchgangsöffnung, und/oder in dem weiteren Deckel, insbesondere auf einer Stufe, vorgesehen und vorzugsweise abgestützt ist. Der Flanschbereich bietet insbesondere den Vorteil einer definierten Aufnahme der Leitung. Zudem kann über den Flanschbereich ein definierter Sitz des Rückschlagventils auf der Leitung bewirkt werden, was insbesondere für eine vorteilhafte Abdichtung zwischen Rückschlagventil und Leitung von Vorteil ist.

Die Leitung erstreckt sich vorzugsweise zwischen zwei Enden, wobei der Flanschbereich an einem der Enden oder zwischen den Enden vorgesehen ist.

Bevorzugt ist, wenn die Leitung zumindest teilweise aus Kunststoff wie beispielsweise PTFE hergestellt ist. Dadurch kann besonders gut über die Leitung eine Dichtungswirkung bereitgestellt werden.

Der Druckbehälter kann ferner ein Schutzelement aufweisen, dass sich in der Reaktionskammer zumindest teilweise zwischen einem oberen Bereich und einem unteren Bereich der Reaktionskammer erstreckt, um den unteren Bereich zumindest teilweise abzudecken. Der untere Bereich ist insbesondere geeignet, Probenbehälter mit darin vorgesehenen Proben aufzunehmen. Das Schutzelement erstreckt sich dann derart, dass es (in Draufsicht gesehen) die Öffnungen dieser Probenbehälter abdeckt. Das Schutzelement kann beispielsweise so vorgesehen sein, dass es einen Eintrag von Kondensat (beispielsweise als Tropfen) oder Verunreinigungen von oberhalb des Schutzelements in die Probenbehälter verhindert, also das Kondensat oder die Verunreinigungen auffängt.

Der Fluid-Einlass ist dabei derart angeordnet, dass dieser auf das Schutzelement gerichtet ist, sodass über den Fluid-Einlass der Reaktionskammer zugeführtes Fluid zunächst in den oberen Bereich und dann in den unteren Bereich strömt. Dadurch wird vorteilhaft verhindert, dass das aus dem Rückschlagventil strömende Fluid und mit diesem etwaige transportierte Substanzen wie beispielsweise Verunreinigungen in die Probenbehälter strömen.

Die Leitung erstreckt sich vorzugsweise in den oberen Bereich. Bevorzugt ist, wenn der weitere Deckel den oberen Bereich begrenzt.

Der Druckbehälter kann ferner einen Fluid-Auslass mit einem Abführventil, das zwischen einer Offenstellung zum Abführen eines Fluids aus der Reaktionskammer und einer Schließstellung zum Stoppen des Abführens des Fluids aus der Reaktionskammer verstellbar ist. Über das Abführventil kann die Abführung eines Fluids, beispielsweise zumindest des über den Fluid-Einlass zugeführten Fluids, geregelt werden. Damit kann über das Abführventil beispielsweise eine Spülung der Reaktionskammer und/oder ein Druck in der Reaktionskammer geregelt werden.

Der Druckbehälter kann ferner eine (elektronische) Steuerungseinrichtung aufweisen, die eingerichtet ist, den Fluid-Einlass und den Fluid-Auslass zu steuern. Die Steuerungseinrichtung kann beispielsweise eingerichtet sein, den Fluid-Einlass, insbesondere das Zuführventil, derart zu steuern, dass nach dem Wechsel des Abführventils in die Schließstellung die Reaktionskammer mittels des über den Fluid-Einlass zugeführten Fluids unter Druck gesetzt wird.

Die Steuerungseinrichtung kann eingerichtet sein, das Abführventil in dessen Offenstellung zu überführen, um mittels des über den Fluid-Einlass zugeführten und anschließend über das Abführventil abgeführten Fluids die Reaktionskammer zu spülen. Diese Spülung kann beispielsweise automatisch erfolgen, insbesondere wenn der Druckbehälter (vorzugsweise über entsprechend eingerichtete Sensoren) ein Ende der in der Reaktionskammer ablaufenden Reaktion erkennt.

Der Druckbehälter kann ferner einen Sauerstoffsensor zum Erfassen eines Sauerstoffgehalts in der Reaktionskammer aufweisen, wobei die Steuerungseinrichtung eingerichtet ist, den Fluid-Einlass und das Abführventil auf Basis des von dem Sauerstoffsensor erfassten Sauerstoffgehalts zu steuern. Dadurch kann das Verhältnis zwischen Fluid und Sauerstoff in der Reaktionskammer vorteilhaft eingestellt und damit eine besonders gute Analyse erzielt werden.

Vorzugsweise ist die Steuerungseinrichtung eingerichtet, den Fluid-Einlass bzw. dessen Zuführventil und das Abführventil derart zu steuern, dass über das in der Offenstellung befindliche Zuführ- und Abführventil die Reaktionskammer gespült wird und wenigstens das Abführventil von der Offenstellung in die Schließstellung wechselt, sobald ein vorbestimmter Sauerstoffgehalt unterschritten wird. Anschließend kann die Reaktion der Reaktionskammer mit einem definierten, insbesondere minimalen Sauerstoffgehalt durchgeführt werden. Dadurch ergibt sich eine besonders vorteilhafte Analyse der Proben.

Das Rückschlagventil kann eingerichtet sein, die Zufuhr des Fluids in die Reaktionskammer zu stoppen, sobald ein bestimmter Druck in der Reaktionskammer erreicht ist. Dies kann beispielsweise erfolgen, indem das elastisches Element des Rückschlagventils entsprechend angeordnet und/oder ausgebildet ist.

Der Deckel kann zumindest teilweise aus Stahl wie beispielsweise NiCr21Mo14W hergestellt sein.

Das Unterteil kann zumindest teilweise aus Stahl wie beispielsweise NiCr21Mo14W hergestellt sein.

Das Rückschlagventil, vorzugsweise dessen Schließelement und/oder Gehäuse, kann (jeweils) zumindest teilweise aus Stahl wie beispielsweise NiCr21Mo14W hergestellt sein.

Nachfolgend wird die Erfindung anhand der Figuren, in denen zwei bevorzugte Ausführungsform der Erfindung dargestellt sind, beispielhaft beschrieben. In den Zeichnungen zeigen:
- Figur 1: eine schematische Schnittansicht einer ersten bevorzugten Ausführungsform des erfindungsgemäßen Druckbehälters;
- Figur 1a: eine schematische Detailansicht, die ein Detail, aufweisend unter anderem das Rückschlagventil, von dem Druckbehälter in Figur 1 zeigt;
- Figur 2: eine schematische Schnittansicht eines oberen Abschnitts einer zweiten bevorzugten Ausführungsform des erfindungsgemäßen Druckbehälters;
- Figur 2a: eine schematische Detailansicht, die ein Detail, aufweisend unter anderem das Rückschlagventil, von dem Druckbehälter in Figur 2 zeigt; und
- Figur 2b: eine schematische Schnittansicht der in Figur 2 gezeigten Ausführungsform.

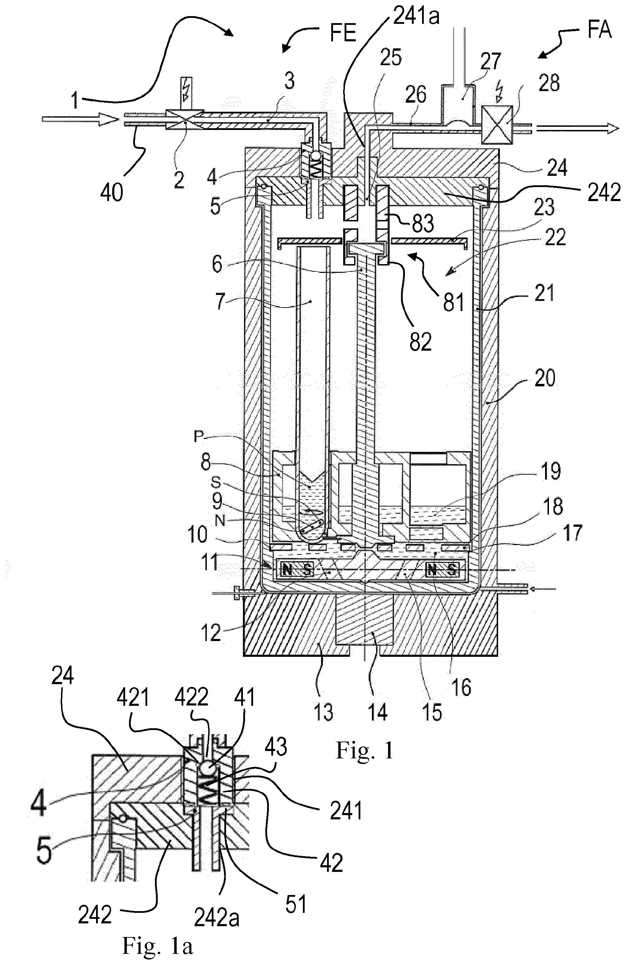

Figur 1 zeigt eine beispielhafte Ausführungsform eines erfindungsgemäßen Druckbehälters 1 zur Aufnahme von zu beheizenden Proben P zum Auslösen und/oder Fördern chemischer und/oder physikalischer Druckreaktionen an den Proben P. Die Probe P kann beispielsweise Feststoffe wie Sand, Boden, Erde und/oder Blätter aufweisen. Der Druckbehälter 1 ist jedoch nicht auf eine bestimmte Probe P beschränkt. Insbesondere können im Druckbehälter 1 jede Art von Proben einer Druckreaktion und/oder Beheizung unterzogen werden, vor allem Proben mit hoher Viskosität bzw. vielen Feststoffanteilen.

Der Druckbehälter 1 kann ein (Hochdruck-)Autoklav sein. Der Druckbehälter 1 besteht vorzugsweise aus einem hochdruckfesten Werkstoff wie beispielsweise Metall, vorzugsweise Stahl, besonders vorzugsweise eine korrosionsbeständige Edelstahl-Legierung. Der Druckbehälter 1 ist dabei vorzugsweise derart ausgebildet, dass er bei Drücken bis zu wenigstens 200 Bar, vorzugsweise bis zu wenigstens 500 Bar, sowie bei Temperaturen von bis zu und auch über 300°C einsetzbar ist.

Der Druckbehälter 1 weist ferner eine Reaktionskammer bzw. einen Druckraum 22 zum Auslösen und/oder Fördern der chemischen und/oder physikalischen Druckreaktionen an den Proben P auf. Die Reaktionskammer 22 ist vorzugsweise ein sogenannter Fluid- bzw. Gasraum. Erkennbar ist, dass der Druckbehälter 1 die Reaktionskammer 22 allseitig umgibt. Die Probe bzw. Proben P sind zur Probenbehandlung in der Reaktionskammer 22 angeordnet und aus dieser vorzugsweise durch eine Öffnung entnehmbar.

Der Druckbehälter 1 weist ein (topfförmiges) Unterteil 20 und ein Deckel 24 (auch "Deckelteil" genannt) auf, die miteinander verschließbar sind und im miteinander verschlossenen Zustand die Reaktionskammer 22 allseitig umgeben. Dabei verschließt der Deckel 24 die in dem Druckbehälter 1, also dem Unterteil 20 des Druckbehälters 1, vorgesehene Öffnung zum Einbringen und Entnehmen der Probe P. Mittels des Deckels 24 kann der Druckbehälter 1 und/oder die Reaktionskammer 22 folglich geöffnet und geschlossen werden. Der Druckbehälter 1 kann ein Befestigungselement wie beispielsweise eine Klammer aufweisen, welches den Deckel 24 an das Unterteil 20 im miteinanderverschlossenen Zustand befestigt, insbesondere derart, dass diese sich während einer in der Reaktionskammer 22 ablaufenden Druckreaktion nicht voneinander lösen. Das Unterteil 20 und der Deckel 24 sind vorzugsweise aus dem gleichen oder identischen Material herstellt. Das Unterteil 20 kann zumindest teilweise aus Stahl wie beispielsweise Edelstahl hergestellt sein. Bevorzugt ist, wenn das Unterteil 20 wenigstens teilweise aus NiCr21Mo14W (bzw. Stahl mit der Werkstoff-Nr. 2.4602) hergestellt ist. Der Deckel 24 kann zumindest teilweise aus Stahl wie beispielsweise Edelstahl hergestellt sein. Bevorzugt ist, wenn der Deckel 24 wenigstens teilweise aus NiCr21Mo14W (bzw. Stahl mit der Werkstoff-Nr. 2.4602) hergestellt ist.

Wie insbesondere die Figur 1 erkennen lässt, ist die Reaktionskammer 22 ferner ausgebildet, eine Flüssigkeit bzw. Grundlast 19 aufzunehmen. Die Flüssigkeit 19 ist vorzugsweise Wasser, kann aber auch jegliche andere stark mikrowellenabsorbierende Flüssigkeit sein oder aufweisen. Die Flüssigkeit 19 ist dabei insbesondere vorgesehen, um die in dem Druckbehälter 1 bzw. in der Reaktionskammer 22 befindliche Probe P zu beheizen bzw. zu erwärmen. Dies kann beispielsweise erfolgen, indem die Probe P von der Flüssigkeit 19 wenigstens teilweise umgeben ist und ein nicht näher dargestellter Mikrowellengenerator über einen mikrowellentransparenten Einsatz 14, beispielsweise vorgesehen im Boden 13 des Druckbehälters 1, die Flüssigkeit 19 durch Mikrowellenabsorption erwärmt.

Die Probe P kann in einem Probenbehälter 7 wie beispielsweise einem Reagenzglas vorgesehen sein. Die Probe P ist in dem Druckbehälter vorzugsweise derart vorgesehen, dass die Flüssigkeit 19 wenigstens bis zu einem Teil der Höhe der Probe P reicht. Es kann jedoch auch vorgesehen sein, dass die Flüssigkeit 19 über die Höhe der Probe P reicht. Vorzugsweise ist der Druckbehälter 1 bzw. die Reaktionskammer 22 ausgebildet zwei oder mehr Proben P aufzunehmen. In entsprechender Weise können auch mehrere Probenbehälter 7 vorgesehen sein, also wenigstens ein Probenbehälter 7, um jeweils eine Probe P aufzunehmen.

Der Druckbehälter 1 kann ferner eine Probenhalterung 8 aufweisen, mit welcher der Probenbehälter 7 in der Reaktionskammer 22 gehalten werden kann. Die Probenhalterung 8 ist vorzugsweise als Korb zur Aufnahme mehrerer Probenbehälter 7 ausgebildet. Die Probenhalterung 8 trägt den wenigstens einen Probenbehälter 7 vorzugsweise derart, dass der Probenbehälter 7 sich in der Flüssigkeit 19 befindet. Die Probenhalterung 8 ist insbesondere dazu ausgebildet, um über eine stabförmige Handhabungsstruktur (Probenhalter) 6, beispielsweise aufweisend einen Griff und/oder Flanschbereich zur vorzugsweise hängenden Befestigung in der Reaktionskammer 22, die wenigstens eine Probe P bzw. den wenigstens einen Probebenbehälter 7 in die Reaktionskammer 22 zu geben und aus dieser wieder zu entnehmen.

Die Probenhalterung 8 kann ferner einen Probenbehälteraufnahmebereich aufweisen, welcher vorzugsweise korrespondierend zu dem Probenbehälter 7 ausgebildet ist. Der Probenbehälteraufnahmebereich kann mehrere Bereiche aufweisen, um mit einem jeweiligen Bereich einen Probenbehälter 7 aufzunehmen. Der Probenbehälteraufnahmebereich bewirkt dabei insbesondere, dass die Probenbehälter 7 in einem bestimmten Muster vorgesehen sind, also beispielsweise in Kreisform um die Handhabungsstruktur 6 herum angeordnet sind. Wie in Figur 1 erkennbar, können die Probenbehälter 7 beispielsweise auf einem einzigen oder mehreren Kreisen um die Handhabungsstruktur 6 herum angeordnet sein. Beispielsweise ist es denkbar, dass die Probenhalterung 8 mehrere Probenbehälter 7 auf unterschiedlichen Radien bzw. Kreisen um die Handhabungsstruktur 6 herum aufnimmt. Der Probenbehälteraufnahmebereich kann insbesondere korrespondierend zur Innenwand der Reaktionskammer 22 ausgebildet sein, um die Probenhalterung 8 in der Reaktionskammer 22 definiert und vorzugsweise zentriert zu halten.

Der Druckbehälter 1 kann ferner eine um eine Rotationsachse drehbar in der Reaktionskammer 22 gelagerte Magnetscheibe 11 aufweisen. Die Magnetscheibe 11 weist eine für eine Scheibe typische Form auf, also insbesondere eine flache und/oder (kreis-)runde Form. Die Magnetscheibe 11 ist in der Reaktionskammer 22 vorzugsweise derart vorgesehen, dass - wenn die Flüssigkeit 19 in der Reaktionskammer 22 vorhanden ist - die Magnetscheibe 11 in der Flüssigkeit 19 vorgesehen ist. Insbesondere kann die Magnetscheibe 11 in einem unteren Bereich der Reaktionskammer 2, vorzugsweise auf dem Boden der Reaktionskammer 2, vorgesehen sein. Vorzugsweise erstreckt sich die Magnetscheibe 11 im Wesentlichen über die gesamte Bodenfläche der Reaktionskammer 22 und lässt somit nur einen kleinen Spalt zwischen Magnetscheibe 11 und einer die Reaktionskammer 22 begrenzenden Wand.

Der Druckbehälter 1 kann ferner eine Platte 18, beispielsweise als Teil eines Podests, aufweisen, welche in der Reaktionskammer 22 vorgesehen und für die Flüssigkeit 19 durchlässig. Erkennbar ist, dass die Platte 18 mit der Reaktionskammer 2, insbesondere mit dem Boden der Reaktionskammer 2, einen Raum definiert, in welchem die Magnetscheibe 11 gelagert sein kann. Die Platte 18 kann hierfür beispielsweise in der Reaktionskammer 22 eingelegt sein und/oder mit den Seitenwänden der Reaktionskammer 22 verbunden sein (beispielsweise über einen Absatz oder eine Kante oder einen Vorsprung 17). Alternativ kann die Platte 18 über sich von der Platte 18 weg erstreckende Seitenwände mit dem Boden der Reaktionskammer 22 verbunden sein. Die in der Flüssigkeit 19 vorgesehene Platte 18 ist für die Flüssigkeit 19 durchlässig, beispielsweise über Löcher oder Durchgriffsöffnungen 16. Die Löcher 16 sind vorzugsweise über die Oberfläche der Platte 18 gleichmäßig verteilt angeordnet. Bevorzugt ist, wenn die Platte 18 aus einem keramischen Material wie beispielsweise Siliciumcarbid hergestellt ist. Da diese Materialen stark mikrowellenabsorbierend sind, kann somit die in der Flüssigkeit 19 vorgesehene Platte 18 mittels Mikrowellenstrahlung erhitzt werden, sodass die Flüssigkeit 19 sich sowohl direkt über Mikrowellenabsorption als auch indirekt über Wärmeabgabe von der Platte 18 erhitzt. Die Probenhalterung 8 ist vorzugsweise auf der Platte 18 gelagert. Die Probenhalterung 8 ist vorzugsweise ausgebildet, um beispielsweise über einen entsprechend ausgestalteten Lagerbereich die Probenhalterung in der Rektionskammer 2 in einer definierten Position und vorzugsweise unbewegbar zu lagern.

Der Druckbehälter 1 kann ferner einen oder mehrere außerhalb der Reaktionskammer 22 vorgesehene Elektromagneten aufweisen. Vorzugsweise weist der Druckbehälter 1 mehrere Elektromagneten auf, welche um die vorgenannte Rotationsachse bzw. um den Umfang der Reaktionskammer 22 gleichmäßig verteilt sind. Mittels des wenigstens einen Elektromagneten kann ein sich (in einem Kreis) rotierendes Magnetfeld zum rotatorischen Antrieb der Magnetscheibe 11 um ihre Rotationsachse gebildet werden. Hierfür ist der wenigstens eine Elektromagnet vorzugsweise entsprechend einem Stator eines Synchron- oder Schrittmotors ausgebildet. Zur Erzeugung des sich rotierenden Magnetfelds kann der Druckbehälter 1 eine nicht näher dargestellte Steuereinheit aufweisen, welche mit dem wenigstens einen Elektromagneten funktional verbunden ist. Die Steuereinheit steuert die Elektromagneten vorzugsweise in einer Weise, wie sie bei Synchronmotoren oder Schrittmotoren bekannt ist, also beispielsweise sinusförmig. Die Steuereinheit kann insbesondere eingerichtet sein, einen in die Elektromagneten gespeisten Wechselstrom zu steuern, also insbesondere die Frequenz des Wechselstroms einzustellen. Über Einstellung der Frequenz des Wechselstroms kann somit die Drehzahl des Magnetfelds und folglich die Drehzahl der Magnetscheibe verändert/variiert werden.

Da die Magnetscheibe 11 sich in dem durch den Elektromagneten bewirkten rotierenden Magnetfeld befindet, wird sich eine Drehzahl der Magnetscheibe 11 einstellen, welche der Drehzahl des durch den Elektromagneten bewirkten Magnetfeldes entspricht. Die Magnetscheibe 11 ist hinsichtlich der Magnetisierung vorzugsweise entsprechend einem Rotor eines Synchron- oder Schrittmotors ausgebildet. Zur Magnetisierung der Magnetscheibe 11 kann die Magnetscheibe 11 einen Permanentmagneten und/oder einen fremderregten Magneten - also einen Magnet, der mit Stromzufuhr betrieben wird - aufweisen.

Alternativ zu dem Elektromagneten kann der Druckbehälter 1 auch eine andere Magnetanordnung aufweisen, beispielsweise einen drehbar vorgesehenen, vorzugsweise außerhalb des Druckbehälters 1 angeordnete Permanentmagneten, sodass durch die Drehung des Permanentmagneten das sich rotierende Magnetfeld zum rotatorischen Antrieb der Magnetscheibe erzeugt wird. Die obigen Ausführungen bzgl. des Elektromagneten gelten für eine solche Magnetanordnung analog.

Ferner ist erkennbar, dass die Magnetscheibe 11 eine oder mehrere sich quer zur Rotationsachse der Magnetscheibe 11 erstreckende Durchgangsbohrungen 12, 15 aufweisen kann. Im Folgenden wird nur die (in der Figur 1 links der Rotationsachse darrgestellte) Durchgangsbohrung 12 beschrieben. Diese Beschreibung gilt für die (in der Figur 1 rechts der Rotationsachse darrgestellte) Durchgangsbohrung 15 analog. Die Durchgangsbohrung 12 ist vorzugsweise derart vorgesehen, dass diese die Magnetscheibe 11 in eine Richtung nach oben und von der Rotationsachse der Magnetscheibe 11 weg durchläuft. Die Durchgangsbohrung 12 kann die Magnetscheibe 11 also in eine Richtung radial zur Drehrichtung der Rotationsachse durchlaufen. Alternativ oder zusätzlich kann die wenigstens eine Durchgangsbohrung 12 die Magnetscheibe in eine Richtung tangential zur Drehrichtung de Rotationsachse durchlaufen. Dies hat insbesondere den Vorteil, dass durch die Drehrichtungsänderung der Magnetscheibe 11 die Richtung des Durchflusses der Flüssigkeit durch die Durchgangsbohrung 12 geändert werden kann. Besonders bevorzugt ist, wenn die jeweilige Durchgangsbohrung 12 durchgängig gerade ausgebildet ist und ihre Längsachse quer zur Rotationsachse der Magnetscheibe 11 vorgesehen ist. Die jeweilige Durchgangsbohrung 12 ist also in einem Winkel zur Rotationsachse der Magnetscheibe 11 vorgesehen, welcher vorzugsweise in einem Bereich von 10 bis 80 Grad liegt und besonders bevorzugt 45 Grad +/- 5 bis 10 Grad beträgt.

Durch wie oben beschriebenes Vorsehen der Durchgangsbohrung 12 kann die in der Reaktionskammer 22 aufgenommene Flüssigkeit 19 durch Rotation der Magnetscheibe 11 durch die Durchgangsbohrung 12 getrieben werden, um die Flüssigkeit 19 zu rühren. Mittels des Rühreffekts wird die Flüssigkeit 19 in eine Richtung nach oben und außen gedrängt und steigt folglich an der Innenwandung der Reaktionskammer 22 auf. Folglich wird im Schnitt gesehen ein im Wesentlichen U-förmiger Flüssigkeitsspiegel gebildet. Die Flüssigkeit 19 wird also von einer Seite der Magnetscheibe 11, beispielsweise von deren Unterseite, zu einer anderen Seite der Magnetscheibe 11, beispielsweise zu deren Oberseite, getrieben, um somit die Flüssigkeit 19 für die Rührung zirkulieren zu lassen. Die Flüssigkeit 19 zirkuliert in der Reaktionskammer 2, indem sie durch den Spalt zwischen Magnetscheibe 11 und Platte 18, durch den Spalt zwischen Magnetscheibe 11 und Boden der Reaktionskammer 2, durch den Spalt zwischen Magnetscheibe 11 und der Innenwand der Reaktionskammer 22, und/oder durch die Durchgangsbohrung 12 strömt. Die Durchgangsbohrung 12 bewirkt also eine Rührung bzw. Verwirbelung der Flüssigkeit 19, wodurch sich die Flüssigkeit 19 schneller und gleichmäßiger erwärmt und die Probe P somit effizienter erhitzt wird. Zur Verstärkung des vorgenannten Rühreffekts ist es bevorzugt, wenn die Magnetscheibe 11 mehrere, also wenigstens zwei, vorzugsweise drei, besonders bevorzugt vier Durchgangsbohrungen 12 aufweist, welche vorzugsweise um die Rotationsachse der Magnetscheibe 11 gleichmäßig verteilt sind.

Der Druckbehälter 1 ist jedoch nicht auf eine derartige Rührung beschränkt. Insbesondere können auch andere Rührmittel zum Rühren der Flüssigkeit 19 verwendet werden, beispielsweise ein auf einer Rührwelle gelagerter Rührstab oder dergleichen.

Wie weiterhin erkennbar, kann der jeweilige Probenbehälter 7 einen Rührmagneten 9 zum Rühren einer in dem Probenbehälter 7 aufgenommenen Probe P aufweisen. Der Rührmagnet 9 ist vorzugsweise ein Permanentmagnet mit Nord- Südpolung. Der Rührmagnet 9 hat vorzugsweise eine längliche Form, um somit über seine Länge die Probe P zu rühren. Der Rührmagnet 9 kann ausgebildet sein, um schräg in dem Probenbehälter 7 zu liegen. Der Rührmagnet 9 ist vorzugsweise als Rührfischchen ausgebildet. Der Rührmagnet 9 kann im Allgemeinen jedoch jede Form aufweisen, welche geeignet ist, um die Probe P zu rühren, also beispielsweise auch eine Propellerform oder dergleichen.

Der Rührmagnet 9 ist bezüglich der Magnetscheibe 11 vorzugsweise derart vorgesehen, dass der Rührmagnet 9 durch das rotierende Magnetfeld des Elektromagneten 10 und/oder der Magnetscheibe 11 in Bewegung versetzt wird. Hierfür ist es besonders von Vorteil, wenn der Rührmagnet 9 in einem (unteren) Teil des Probenbehälters 7 vorgesehen ist, welcher unmittelbar gegenüber der Magnetscheibe 11 und/oder der Platte 18 vorgesehen ist, sodass das Magnetfeld der Magnetscheibe 11 gut auf den Rührmagneten 9 wirkt. Das jeweilige Magnetfeld der Magnetscheibe 11 und/oder des Elektromagneten 10 bewegt sich also relativ zum Probenbehälter 7, wodurch der Rührmagnet 9 in eine Bewegung bzw. Drehung versetzt wird, welche der Drehung des jeweiligen Magnetfelds bzw. der Magnetfelder entspricht. Durch diese Bewegung wird die Probe P folglich mittels des Rührmagneten 9 gerührt, wodurch insbesondere Proben mit hoher Viskosität bzw. vielen Feststoffanteilen effizient homogenisiert werden können.

Der Druckbehälter 1 kann zum Erwärmen bzw. Beheizen, insbesondere der Flüssigkeit 19, der Platte 18 und/oder der Proben P, jegliche Mittel zur direkten oder indirekten Abgabe von Wärme aufweisen. Bevorzugt ist, wenn der Druckbehälter 1 einen nicht näher dargestellten Mikrowellengenerator aufweist, welcher über den Mikrowelleneinkopplungsbereich 14 Mikrowellen in die Reaktionskammer 22 einkoppelt. Die generierten Mikrowellen gelangen in die Reaktionskammer 22 dabei vorzugsweise über das Magnetfeld der Magnetscheibe 11 und/oder des Elektromagneten 10, sodass das Magnetfeld mit den eingekoppelten Mikrowellen wechselwirken kann, um beispielsweise eine vorteilhafte Lenkung der Mikrowellen zu bewirken.

Der Druckbehälter 1 weist ferner einen Fluid-Einlass FE, vorzugsweise mit einem (elektrischen) Zuführventil 2 auf. Das Zuführventil 2 ist zwischen einer Offenstellung zum Zuführen eines Fluids in die Reaktionskammer 22 und einer Schließstellung zum Stoppen des Zuführens des Fluids verstellbar. Das Zuführventil 2 ist vorzugsweise ein elektrisch betätigbares Ventil. Die Zuführrichtung ist schematisch mit dem auf das Zuführventil 2 zeigenden Pfeil angedeutet. Das Fluid kann beispielsweise ein Spülgas
und/oder Ladegas sein. Vorzugsweise weist das Fluid Stickstoff, Argon und/oder Luft auf. Denkbar ist insbesondere jedes Fluid, das wenig bis keinen Sauerstoff aufweist. Vorzugsweise ist das Fluid ein reduktives Gas, besonders bevorzugt ein Inertgas, Argon und/oder Wasserstoff aufweisendes Fluid. Besonders bevorzugt weist das Fluid 5 Vol. % oder weniger Wasserstoff auf. Letztgenanntes Fluid eignet sich in besonders vorteilhafter Weise, da es nicht brennbar ist. Zum Zuführen des Fluids ist das Zuführventil 2 vorzugsweise mit einem nicht näher dargestellten Fluid-Reservoir wie beispielsweise einem das Fluid beinhaltenden Container oder Behältnis fluidisch verbunden. Das Behältnis, welches das Fluid aufweist, kann in der Nähe des Druckbehälters 1 oder auch in dem Druckbehälter 1 integriert vorgesehen sein, beispielsweise in einem den Druckbehälter 1 aufnehmenden Gehäuse.

Das Zuführventil 2 ist vorzugsweise oberhalb der im Druckbehälter 1 aufgenommenen Probe P vorgesehen. Insbesondere kann das Zuführventil 2 oberhalb des Deckels 24 angeordnet sein. Vorzugsweise ist das Zuführventil 2 außerhalb der Reaktionskammer 22 und/oder des Druckbehälters 1 angeordnet, um somit eine gute Zugänglichkeit für das Zuführventil 2 bereitzustellen.

Erkennbar ist ferner, dass eine Zuführleitung 40 (also beispielsweise eine Druck-Gaszufuhrleitung) vorgesehen sein kann, die wenigstens mit dem Zuführventil 2 fluidisch verbunden ist. Die Zuführleitung 40 verläuft hierfür wenigstens teilweise außerhalb des Druckbehälters 1, um das außerhalb des Druckbehälters 1 vorgesehene Zuführventil 2 mit dem in die Reaktionskammer 22 mündenden Fluid-Einlass FE fluidisch zu verbinden. Die stromaufwärts des Zuführventils 22 vorgesehene Zuführleitung 40 ist vorzugsweise ausgebildet, um mit dem zuvor genannten Reservoir verbunden zu werden. Zur besonders kompakten Ausführung des Druckbehälters 1 kann die Zuführleitung 40 sich in eine Richtung nach seitlich des Druckbehälters 1, also in Figur 1 nach links, erstrecken.

Der Druckbehälter 1 kann ferner einen Fluid-Auslass FA mit einem (elektrischen) Abführventil 28 aufweisen. Das Abführventil 28 ist zwischen einer Offenstellung zum Abführen eines Fluids aus der Reaktionskammer 22 und einer Schließstellung zum Stoppen des Abführens des Fluids aus der Reaktionskammer 22 verstellbar. Das heißt, über das in der Offenstellung befindliche Abführventil 28 kann insbesondere Sauerstoff und das über das Zuführventil 2 zugeführte Fluid aus der Reaktionskammer 22 abgeführt werden. Mittels des über das Zuführventil 2 zugeführten Fluids kann in der Reaktionskammer 22 ein Überdruck erzeugt, sodass wenigstens ein Teil des zugeführten Fluids und insbesondere Sauerstoff über den Fluid-Auslass FA sowie das Abführventil 28 nach außerhalb der Reaktionskammer 22 und des Druckbehälters 1 abgeführt wird. Es kann außerdem vorgesehen sein, dass das Abführventil 28 ausgelegt ist oder zumindest mit entsprechenden Mittel verbunden ist, um in der Offenstellung einen Unterdruck bezüglich der Reaktionskammer 22 zu bilden, um somit insbesondere Sauerstoff aus der Reaktionskammer 22 zu saugen. Das Abführventil 28 ist vorzugsweise oberhalb des Druckbehälters 1 bzw. oberhalb der im Druckbehälter 1 aufgenommenen Probe P vorgesehen. Besonders bevorzugt ist, wenn das Abführventil 28 außerhalb der Reaktionskammer 22 und/oder des Druckbehälters 1 vorgesehen ist, um beispielsweise einen guten Zugang zu dem Abführventil 28 zu ermöglichen. Das Abführventil 28 kann jedoch auch in anderer Weise vorgesehen sein, beispielsweise in dem Deckel 24 des Druckbehälters 1 integriert sein.

Der Druckbehälter 1 oder der Fluid-Auslass FA kann ferner eine Abführleitung 26 aufweisen, welche die Reaktionskammer 22 mit dem Abführventil 28 fluidisch verbindet. Die Abführleitung 26 ist dabei bevorzugt derart vorgesehen, dass diese sich von dem Deckel 24 bis wenigstens zu dem Abführventil 28 erstreckt. Die Abführleitung 26 kann wenigstens teilweise mit dem Deckel 24 integral ausgebildet sein und/oder an diesem befestigt sein, beispielsweise über eine Schraub- und/oder Klemmverbindung. Vorzugsweise erstreckt sich die Abführleitung 26 nach oberhalb des Druckbehälters 1 und anschließend in eine Richtung seitlich des Druckbehälters 1, also beispielsweise parallel zur Horizontalen. Somit kann der Druckbehälter 1 kompakt ausgeführt werden.

Der Fluid-Auslass FA kann ein Drucksicherungselement 27 aufweisen. Das Drucksicherungselement 27 ist vorzugsweise stromaufwärts des Abführventils 28 vorgesehen.

Das Drucksicherungselement 27 ist vorgesehen, um den Druckbehälter 1 vor einem schädigenden Überdruck zu schützen. Das Drucksicherungselement 27 ist also ausgebildet, bei einem Druck, der über einem definierten Druck liegt, zu öffnen, wodurch der Druck in der Reaktionskammer 22 abfällt und nicht den schädigenden Überdruck nicht erreicht. Das Drucksicherungselement 27 kann als Drucksicherung eine Sollbruchstelle aufweisen, beispielsweise vorgesehen in einer Scheibe. Bevorzugt ist, wenn das Drucksicherungselement 27 eine Berstscheibe ist.

Der Druckbehälter 1 kann ferner einen Sauerstoffsensor zum Erfassen eines Sauerstoffgehalts in der Reaktionskammer 22 aufweisen. Ist die Abführleitung 26 vorhanden, kann der Sauerstoffsensor in Fluidverbindung mit der Abführleitung 26 sein. Bevorzugt ist, wenn der Sauerstoffsensor außerhalb der Reaktionskammer 22 vorgesehen ist, um gut zugänglich zu sein, beispielsweise für Montage- und/oder Wartungszwecke. Zum Beispiel kann der Sauerstoffsensor stromabwärts von dem Abführventil 28 vorgesehen sein. Der Sauerstoffsensor kann jedoch auch stromaufwärts des Abführventils 28 vorgesehen sein. Der Sauerstoffsensor erfasst den Sauerstoffgehalt/Sauerstoffanteil in der Reaktionskammer 22 vorzugsweise derart, dass auf Basis des Sauerstoffgehalts einer aus der Reaktionskammer 22 abgeführten Menge des Fluids auf den Sauerstoffgehalt in der Reaktionskammer 22 geschlossen werden kann. Es kann jedoch auch vorgesehen sein, dass der Sauerstoffsensor die absolute Menge an abgeführten Sauerstoff misst und über eine Bilanzierung dann auf die absolute Menge an Sauerstoff und somit den (relativen) Sauerstoffgehalt in der Reaktionskammer 22 schließt. Alternativ kann auch vorgesehen sein, dass der Sauerstoffsensor innerhalb des Druckbehälters 1 bzw. der Reaktionskammer 22 vorgesehen ist, um direkt den Sauerstoffgehalt in der Reaktionskammer 22 zu messen.

Der Druckbehälter 1 kann ferner eine nicht näher dargestellte Steuerungseinrichtung aufweisen, welche wenigstens mit dem Zuführventil 2, dem Abführventil 28 und dem Sauerstoffsensor funktional verbunden ist. Genauer gesagt wird der von dem Sauerstoffsensor erfasste Wert des Sauerstoffgehalts an die Steuerungseinrichtung weitergeleitet, sodass die Steuerungseinrichtung auf Basis dieses Werts bzw. Sauerstoffgehalts wenigstens das Abführventil 28 und vorzugsweise auch das Zuführventil 2 entsprechend steuert. Vorzugsweise steuert die Steuerungseinrichtung das Zuführventil 2 und das Abführventil 28 auf Basis des zuvor genannten Sauerstoffgehalts derart, dass sobald ein vorbestimmter Sauerstoffgehalt unterschritten wird, das Abführventil 28 von der Offenstellung in die Schließstellung wechselt. Der vorbestimmte Sauerstoffgehalt kann beispielsweise über eine Benutzerschnittstelle oder dergleichen eingegeben, an die Steuerungseinrichtung weitergeleitet und in dieser folglich gespeichert werden. Der vorbestimmte Sauerstoffgehalt beträgt vorzugsweise so viel, dass dieser keine Veränderung an den Proben P bewirkt. Der (vorbestimmte) Sauerstoffgehalt wird vorzugsweise in Vol. % angegeben und liegt in einer bevorzugten Ausführungsform in einem Bereich von 0 bis 10 Vol. %, insbesondere in einem Bereich von 0 bis 8 Vol. %, beispielsweise 5 Vol. %. Die Erfindung ist auf die vorbezeichneten Werte(bereiche) nicht beschränkt; vielmehr können diese je nach Wunsch bzw. Anforderung an die Reaktion entsprechend festgelegt und eingestellt werden. Das heißt, solange der in der Reaktionskammer 22 vorgesehene Sauerstoffgehalt über den vorbestimmten Sauerstoffgehalt liegt, wird die Reaktionskammer 22 über das jeweils in der Offenstellung befindliche Zuführventil 2 und Abführventil 28 gespült, also insbesondere Sauerstoff aus der Reaktionskammer 22 abgeführt.

Bevorzugt ist, wenn die Steuerungseinrichtung ferner dazu eingerichtet ist, das Zuführventil 2 derart zu steuern, dass das Zuführventil 2 nach dem Wechsel des Abführventils 28 in die Schließstellung - also sobald der vorbestimmte Sauerstoffgehalt unterschritten wurde - in der Offenstellung bleibt bzw. verharrt. Somit wird die Reaktionskammer 22 mittels des über das Zuführventil 2 zugeführten Fluids unter Druck gesetzt, um insbesondere mit den Proben P zusammenzuwirken, damit beispielsweise der Siedepunkt dieser Proben und vorzugsweise auch der Lösemittel der Proben erhöht wird. Alternativ kann auch vorgesehen sein, dass die Steuerungseinrichtung derart eingerichtet ist, dass auch bzw. gleichzeitig mit dem Abführventil 28 das Zuführventil 2 in die Schließstellung wechselt, sobald der vorbestimmte Sauerstoffgehalt unterschritten wurde.

Ferner kann vorgesehen sein, dass die Steuerungseinrichtung unter zusätzlichen bzw. alternativen Voraussetzungen das Zuführventil 2 schließt. Beispielsweise kann die Steuerungseinrichtung das Zuführventil 2 derart steuern, dass dieses in die Schließstellung bewegt wird, sobald eine bestimmte Menge des zugeführten Fluids in der Reaktionskammer 22 vorhanden ist bzw. das zugeführte Fluid in der Reaktionskammer 22 einen bestimmten Druck bewirkt hat. Hierfür kann der Druckbehälter 1 einen nicht näher dargestellten Drucksensor aufweisen, welcher mit der Steuerungseinrichtung funktional verbunden ist und vorgesehen ist, den Druck innerhalb der Reaktionskammer 22 zu messen. Der so erfasste Druckwert wird dann an die Steuerungseinrichtung weitergeleitet und in der Steuerungseinrichtung mit einem in der Steuerungseinrichtung vorbestimmten bzw. abgespeicherten Druckwert verglichen. Dieser kann beispielweise ebenfalls über die zuvor beschriebene Benutzerschnittstelle oder anderweitig eingegeben, an die Steuerungseinrichtung weitergeleitet und in dieser folglich gespeichert werden. Die Steuerungseinrichtung entscheidet dann auf Basis des Vergleichs des erfassten Druckwerts mit dem vorbestimmten Druckwert, ob das Zuführventil 2 geschlossen werden soll oder nicht. Insbesondere wenn der erfasste Druckwert den vorbestimmten Druckwert überschreitet, kann die Steuerungseinrichtung entscheiden, dass das Zuführventil 2 in die Schließstellung wechselt. Alternativ oder zusätzlich kann der Druckbehälter 1 auch andere Mittel zur Erfassung des Fluidgehalts in dem Druckbehälter 1 aufweisen, um somit analog der zuvor beschriebenen Weise zu entscheiden, ob das Zuführventil 2 geschlossen werden soll oder nicht.

Die Steuerungseinrichtung kann ferner dazu eingerichtet sein, dass nach Beenden der Druckreaktionen in der Reaktionskammer 22 die Steuerungseinrichtung wenigstens das Abführventil 28 betätigt, sodass dieses in die Offenstellung wechselt. Über den in der Reaktionskammer 22 herrschenden Druck kann/können somit über das Abführventil 28 das in der Reaktionskammer 22 vorhandene Fluid und vorzugsweise auch während der Druckreaktionen entstandene Gase bzw. Fluide aus der Reaktionskammer 22 abgeführt werden. Alternativ oder zusätzlich kann die Steuerungseinrichtung auch eingerichtet sein, nach Beenden der Druckreaktion das Zuführventil 2 zu betätigen, sodass dieses in die Offenstellung wechselt. Somit können beispielsweise über eine weitere Spülung die in der Reaktionskammer 22 vorhandenen Fluide, also insbesondere das zuvor zugeführte Fluid und vorzugsweise auch die während der Druckreaktion entstandenen Gase, besonders schnell über das Abführventil 28 nach außerhalb der Reaktionskammer 22 abgeführt werden.

Im Folgenden soll ein beispielhaftes Verfahren zur Durchführung einer Spülung und einer Druckreaktion mittels des Druckbehälters 1 beschrieben werden.

Zu Beginn befinden sich sowohl das Zuführventil 2 als auch das Abführventil 28 jeweils in der Offenstellung. Durch Zuführung des Fluids über den Fluid-Einlass FE sowie Abführen des Fluids über den Fluid-Auslass FA wird mittels des Fluids die Reaktionskammer 22 gespült. Gleichzeitig wird mittels des Sauerstoffsensors der Sauerstoffgehalt in der Reaktionskammer 22 gemessen/erfasst. Sobald der so erfasste Sauerstoffgehalt einen vorbestimmten Sauerstoffgehalt unterschreitet, wird wenigstens das Abführventil 28 in die Schließstellung bewegt. In einem anderen Ausführungsbeispiel wird gleichzeitig auch das Zuführventil 2 geschlossen. Wird der vorbestimmte Sauerstoffgehalt nicht unterschritten, so wird der zuvor beschriebene Spülvorgang fortgesetzt, bis der Sauerstoffgehalt in der Reaktionskammer 22 den vorbestimmten Sauerstoffgehalt unterschreitet.

Befindet sich das Abführventil 28 in der Schließstellung, kann weiterhin über das Zuführventil 2 das Fluid der Reaktionskammer 22 zugeführt werden. Dies erfolgt vorzugsweise so lange, bis ein vorbestimmter Druck in der Reaktionskammer 22 erreicht ist und/oder eine bestimmte Menge des Fluids in der Reaktionskammer 22 vorhanden ist. Entsprechende Sensoren können hierfür beispielsweise in der Reaktionskammer 22 vorgesehen sein, um den in der Reaktionskammer 22 herrschenden Druck und/oder die Menge des Fluids zu messen. Wenn der so erfasste Druck und/oder die so erfasste Menge des Fluids einen entsprechend bestimmten Wert überschreitet, wechselt das Zuführventil 2 in die Schließstellung.

Anschließend kann die Steuerungseinrichtung entsprechende Mittel ansteuern, also insbesondere den Mikrowellengenerator und/oder die Elektromagneten zum Rühren der Flüssigkeit 19 mittels der Magnetscheibe 11, damit die Druckreaktion ablaufen kann. Die Druckreaktion läuft vorzugsweise so lange, bis der Nutzer des Druckbehälters 1 dies wünscht und/oder bis bestimmte Betriebsparameter das Reaktionsende (automatisch) erfassen. Auf Basis des Reaktionsendes bzw. eines anderen automatisch erfassten Betriebsparameters (beispielsweise Wartung oder Pflege des Druckbehälters oder der Reaktionskammer) kann sodann die Steuerungseinrichtung den Fluid-Einlass FE und den Fluid-Einlass FA ansteuern, um die wie oben beschriebene Spülung der Reaktionskammer 22 durchzuführen. Dadurch kann beispielsweise bewirkt werden, dass unerwünschte (vor allem giftige) Gase aus der Reaktionskammer 22 abgeführt werden, bevor ein Nutzer die Proben P aus der Reaktionskammer 22 entnimmt.

Erfindungsgemäß weist der Fluid-Einlass FE ein Rückschlagventil 4 auf. Das Rückschlagventil 4 ist angeordnet, nur in einer Richtung eine Strömung des Fluids zuzulassen, nämlich in der Richtung von dem Fluid-Einlass FE in die Reaktionskammer 22. Das Rückschlagventil 4 ist also insbesondere so angeordnet, dass ein Fluid nicht von der Reaktionskammer 22 über das Rückschlagventil 4 in den Fluid-Einlass FE, insbesondere in einen Abschnitt zwischen Zuführventil 2 und Rückschlagventil 4, strömen kann. Das Rückschlagventil 4 kann mit dem stromaufwärts des Rückschlagventils 4 vorgesehenen Zuführventil 2 über eine Fluidleitung 3 (beispielsweise in der Form eines Rohrs und/oder Schlauchs) verbunden sein. Die Fluidleitung 3 kann dabei zwei Enden aufweisen, wobei das Zuführventil 2 an dem einem Ende und das Rückschlagventil 4 an dem anderen Ende vorgesehen ist. Dadurch ist es möglich, dass ein Fluid nicht von der Reaktionskammer 22 über das Rückschlagventil 4 in die Fluidleitung 3 strömen kann. Die Enden der Fluidleitung 3 stellen ein stromabwärtiges Ende und ein stromaufwärtiges Ende dar. Das Rückschlagventil 4 ist dabei an dem stromabwärtigen Ende vorgesehen und vorzugsweise an diesem (dichtend) befestigt, das Zuführventil 2 ist bevorzugt an dem stromaufwärtigen Ende vorgesehen und an diesem optional befestigt. In anderen Ausführungsformen kann das Zuführventil 2 auch zwischen den Enden der Zuführleitung vorgesehen sein.

Das Rückschlagventil 4 ist nicht auf eine bestimmte Ausgestaltung beschränkt. Wie insbesondere in der Figur 1a erkennbar, kann das Rückschlagventil 4 beispielsweise ein vorzugsweise kugelförmiges Schließelement 41, ein Gehäuse 42 mit einem Dichtungssitz 421 und einer Öffnung 422 und ein elastisches Element 43, vorzugsweise ausgestaltet als Feder bzw. Ventilfeder, aufweisen oder aus diesen bestehen. Das Schließelement 41 ist dabei vorgesehen, die Öffnung 422 bei einer Strömung eines Fluids vom Fluid-Einlass FE in die Reaktionskammer 22 zu öffnen oder freizugeben, sodass das Fluid dann durch die Öffnung 422 und in die Reaktionskammer 22 strömen kann. Dagegen wird eine Strömung in entgegengesetzter Richtung das Schließelement 41 in Richtung des Dichtungssitzes 421 treiben und gegen dieses vorzugsweise drücken, wodurch die Öffnung 422 verschlossen ist. Das elastische Element 43 ist dabei so angeordnet, dass dessen Rückstellkraft (die beispielsweise vorhanden ist, wenn das Schließelement 41 auf dem Dichtungssitz 421 schließt und dadurch die Öffnung 422 schließt und/oder das Schließelement 41 von dem Dichtungssitz 421 entfernt ist und dadurch die Öffnung 422 freigibt), das Schließelement 41 in Richtung der Schließposition, also in Richtung des Dichtungssitzes 421, spannt oder drückt. Das elastische Element 43 ist vorzugsweise in dem Gehäuse 42 aufgenommen.

Gemäß der Erfindung ist das Rückschlagventil 4 in einer speziellen Anordnung relativ zu dem Deckel 24 angeordnet, nämlich derart, dass das Rückschlagventil 4 sich zumindest teilweise in dem Deckel 24 - also in der Deckelwand -erstreckt. Das Rückschlagventil 4 kann sich auf unterschiedliche Weise zumindest teilweise in dem Deckel bzw. der Deckelwand 24 erstrecken. In der Figur 1 ist eine beispielhafte Möglichkeit gezeigt. Wie Figur 1 erkennen lässt, kann der Deckel bzw. die Deckelwand 24 beispielsweise eine Durchgangsöffnung 241 (beispielsweise als Durchgangsbohrung) aufweisen, in der sich das Rückschlagventil 4 zumindest teilweise erstreckt und/oder in der das Rückschlagventil 4 zumindest teilweise aufgenommen und/oder befestigt ist. Die Durchgangsöffnung 241 kann sich dabei durchgängig mit konstantem Querschnitt, also beispielsweise mit demselben Durchmesser, erstrecken. Die Durchgangsöffnung 241 erstreckt sich - hier in dem/der bzw. durch den/die Deckel/Deckelwand 24 - vorzugweise von einer (von der Reaktionskammer 22 abgewandten) Vorderseite des Deckels 24 zu einer (der Reaktionskammer 22 zugewandten) Rückseite des Deckels 24. Die Befestigung des Rückschlagventils 4 kann dabei auf unterschiedliche Weise erfolgen, beispielsweise indem das Gehäuse 42 in die Durchgangsöffnung 241 kraft- und/oder formschlüssig (beispielsweise mittels Presspassung) eingesteckt und/oder eingeschraubt ist. In der in Figur 1 dargestellten Ausführungsform erstreckt sich das Rückschlagventil 4 bevorzugt derart, dass der Dichtungssitz 421 (in einer Seitenansicht gesehen) zumindest teilweise und vorzugsweise komplett innerhalb des Deckels bzw. der Deckelwand 24 angeordnet oder eingelassen ist.

Wie in Figur 1 erkennbar, kann stromabwärts des Rückschlagventils 4 und des Deckels 24 ein weiterer Deckel 242, vorzugsweise hergestellt aus Kunststoff wie beispielsweise PTFE, vorgesehen sein. Der weitere Deckel 242 dient vorzugsweise als Teil einer Auskleidung, um zumindest einen Teil des Deckels 24, beispielweise dessen Rückseite, zumindest teilweise abzudecken. Der weitere Deckel 242 begrenzt die Reaktionskammer 22, vorzugsweise derart, dass ein in der Reaktionskammer 22 befindliches Fluid mit dem weiteren Deckel 242 in Kontakt steht und dadurch vorzugsweise nicht mit dem Deckel 24 in Kontakt steht. Dadurch wird verhindert, dass der Deckel 24 in unerwünschter Weise von einem in der Reaktionskammer 22 befindlichen Fluid angegriffen wird.

Der weitere Deckel 242 weist eine Durchgangsöffnung 242a (beispielsweise als Durchgangsbohrung) auf, die bezüglich des Rückschlagventils 4 derart angeordnet ist, dass das aus dem Rückschlagventil 4 strömende Fluid durch die Durchgangsöffnung 242a strömen kann. Hierfür kann das Rückschlagventil 4 bezüglich des weiteren Deckels 242 bzw. dessen Durchgangsöffnung 242a in unterschiedlicher Weise angeordnet sein. Zum Beispiel kann, wie in Figur 1 dargestellt, das Rückschlagventil 4 direkt oder indirekt auf dem weiteren Deckel 242 aufliegen und/oder bezüglich der Durchgangsöffnung 242a zentriert sein oder mit dieser fluchten. Optional weist der weitere Deckel 242 eine weitere Durchgangsöffnung 25 (beispielsweise als Durchgangsbohrung) auf, die die Reaktionskammer 22 fluidisch mit der Abführleitung 26 verbindet. Die fluidische Verbindung erfolgt dabei vorzugsweise über den Deckel 24, beispielsweise indem dieser eine weitere Durchgangsöffnung 241a (beispielsweise als Durchgangsbohrung) aufweist. Dadurch kann ein Fluid aus der Reaktionskammer 22 über zunächst die Durchgangsöffnung 25 und dann die weitere Durchgangsöffnung 241a in die Abführleitung 26 strömen. Die Durchgangsöffnung 25 ist bezüglich des weiteren Deckels 242 vorzugsweise zentriert und/oder mit der weiteren Durchgangsöffnung 241a fluchtend vorgesehen.

Eine Abführung von Fluid aus der Reaktionskammer 22 kann optional über eine Leitung erfolgen, die in einem Befestigungsbereich 81 vorgesehen ist, der zur Befestigung des Probenhalters 8, beispielsweise der Handhabungsstruktur 6 des Probenhalters 8, vorgesehen ist. Vorzugsweise weist der Befestigungsbereich 81 eine Aufhängung auf. Bevorzugt ist, wenn die weitere Durchgangsöffnung 25 fluidisch mit der Leitung des Befestigungsbereichs 81 verbunden ist. Der Befestigungsbereich 81 kann einen ersten Abschnitt 82 aufweisen, an dem der Probenhalter 8 befestigt oder gehalten ist. Vorzugsweise ist der erste Abschnitt 82 ausgebildet, die Handhabungsstruktur 6, beispielsweise über deren Flanschbereich, zu tragen. Der erste Abschnitt 82 bildet also bevorzugt die Aufhängung. Der Befestigungsbereich 81 kann ferner einen zweiten Abschnitt 83 aufweisen, der die Leitung zum Abführen von dem Fluid aus der Reaktionskammer 22 aufweist. Die Durchgangsöffnung 25 mündet dann vorzugsweise in den zweiten Abschnitt 83.

Insbesondere zum Schutz der Innenwand des Unterteils 20 kann in diesem ein Mantel 21, vorzugsweise hergestellt aus Kunststoff wie beispielsweise PTFE, vorgesehen sein, der die Reaktionskammer 22 zumindest teilweise begrenzt. Der Mantel 21 bildet also vorzugsweise eine Innenauskleidung, insbesondere in der Form eines Behälters. Der Mantel 21 ist vorzugsweise so vorgesehen, dass dieser zusammen mit dem weiteren Deckel 242 die Reaktionskammer 22 allseitig umgibt. Bevorzugt ist, wenn zumindest ein Teil des weiteren Deckels 242 (beispielsweise ein Flanschbereich, wie in Figur 1 dargestellt), zwischen Mantel 21 und Deckel 24 vorgesehen und/oder geklemmt ist.

Stromabwärts des Rückschlagventils 4 kann eine Leitung 5, beispielsweise ausgestaltet als Rohr oder Zuführungsrohr, vorgesehen sein, über die das aus dem Rückschlagventil 4 strömende Fluid der Reaktionskammer 22 zuführbar ist. Die Leitung 5 kann aus unterschiedlichen Materialien hergestellt sein. Bevorzugt ist die Leitung 5 aus Kunststoff wie beispielsweise PTFE hergestellt. Die Leitung 5 ist bevorzugt so vorgesehen, dass diese sich in oder durch den weiteren Deckel 242 erstreckt. Bevorzugt ist, wenn sich die Leitung 5 in oder durch die Durchgangsöffnung 242a des weiteren Deckels 242 und vorzugsweise in die Reaktionskammer 22 hinein erstreckt. In der in Figur 1 dargestellten Ausführungsform ist die Leitung 5 zudem so vorgesehen, dass sich diese nicht in den Deckel 24 erstreckt. Bevorzugt ist, wenn sich das Rückschlagventil 4, beispielsweise über dessen Gehäuse 42, auf der Leitung 5 abstützt, sodass beispielsweise ein Teil der Leitung 5 zwischen Rückschlagventil 4 und weiterem Deckel 242 geklemmt ist. Durch diese Klemmwirkung kann beispielsweise eine Dichtungswirkung bereitgestellt sein.

Die Leitung 5 kann über unterschiedliche Mittel aufgenommen sein, beispielsweise über kraft- und/oder formschlüssige Mittel. Bevorzugt ist, wenn die Leitung 5 einen Flanschbereich 51 aufweist, der in der in Figur 1 dargestellten Ausführungsform an einem Ende der Leitung 5, nämlich an deren stromaufwärtigen Ende, vorgesehen ist. Der weitere Deckel 242 kann eine Aussparung, beispielsweise in Form einer wenigstens teilweise zum Flanschbereich 51 komplementäre Aussparung oder Stufe oder Senke, auf seiner dem Deckel 24 zugewandten Seite aufweisen, in welcher der Flanschbereich 51 vorgesehen oder abgestützt oder aufgenommen ist. Die Aussparung kann beispielsweise in die Durchgangsöffnung 242a münden. Das Rückschlagventil 4 kann sich auf dem Flanschbereich 51 abstützen, sodass dieser beispielsweise zwischen Rückschlagventil 4 (oder Gehäuse 42) und weiterem Deckel 242 (oder zuvor genannter Aussparung oder Stufe) geklemmt ist.

Wie die Figur 1 erkennen lässt, kann der Druckbehälter 1 ferner ein Schutzelement 23 aufweisen, das sich zumindest teilweise zwischen einem oberen Bereich und einem unteren Bereich der Reaktionskammer 22 erstreckt. Bevorzugt ist, wenn der obere Bereich von dem weiteren Deckel 242 und/oder einem (oberen) Teil des Mantels 21 begrenzt ist. In dem oberen Bereich ist vorzugsweise die Leitung und/oder der erste Abschnitt 83 des Befestigungsbereichs 81 vorgesehen. Der untere Bereich ist der Bereich der Reaktionskammer 22, in dem die Probenbehälter 7 angeordnet sind und der vorzugsweise von einem (unteren) Teil des Mantels 21 begrenzt ist. Das Schutzelement 23 ist damit vorzugsweise angeordnet, die Probenbehälter 7 und/oder deren Öffnungen in Draufsicht gesehen abzudecken. Dadurch wird vor allem verhindert, dass Kondensat und/oder Verunreinigungen von dem oberen Bereich in die Probenbehälter 7 gelangen oder tropfen. Der Fluid-Einlass FE, also insbesondere das Rückschlagventil 4, ist so im Deckel 24 angeordnet, dass eine aus dem Rückschlagventil 4 strömende Fluidströmung auf das Schutzelement 23 gerichtet ist. Dadurch kann verhindert werden, dass die Fluidströmung direkt in einen oder mehrere der Probenbehälter 7 strömt und/oder Kondensat und/oder Verunreinigung dorthin transportiert. Damit die auf das Schutzelement 23 gerichtete Fluidströmung bereitgestellt ist, kann beispielsweise die Leitung 5 so vorgesehen sein, dass diese sich in den oberen Bereich erstreckt, also beispielsweise in diesem Bereich von dem weiteren Deckel 242 hervorsteht.

Das Schutzelement 23 ist vorzugsweise so vorgesehen, dass zwischen diesem und einer die Reaktionskammer 22 begrenzenden Wand, also beispielsweise dem Mantel 21, ein Spalt gebildet ist. Über diesen Spalt kann das in den oberen Bereich über den Fluid-Einlass FE strömende Fluid in den unteren Bereich gelangen, um für die Druckreaktion an den Proben P zur Anwendung zu kommen. Das Schutzelement 23 kann scheibenförmig und/oder als Deckel ausgebildet sein. Das Schutzelement 23 kann an einer beliebigen Stelle im Druckbehälter 1 vorgesehen und/oder gehalten und/oder befestigt sein. Bevorzugt ist, wenn die Halterung und/oder Befestigung lost ist, sodass im gehaltenen und/oder befestigten Zustand das Schutzelement 23 beispielsweise noch in Richtung des oberen und/oder unteren Bereichs bewegbar ist. In der in Figur 1 dargestellten Ausführungsform ist das Schutzelement 23 beispielhaft an einem Bereich vorgesehen und/oder befestigt, an dem die Probenhalterung 8, beispielsweise über die Handhabungsstruktur 6, befestigt ist. Das Schutzelement 23 kann also beispielsweise an dem Befestigungsbereich 81, vorzugsweise an dem ersten Abschnitt 82 oder zwischen den Abschnitten 82, 83, gehalten und/oder befestigt sein.

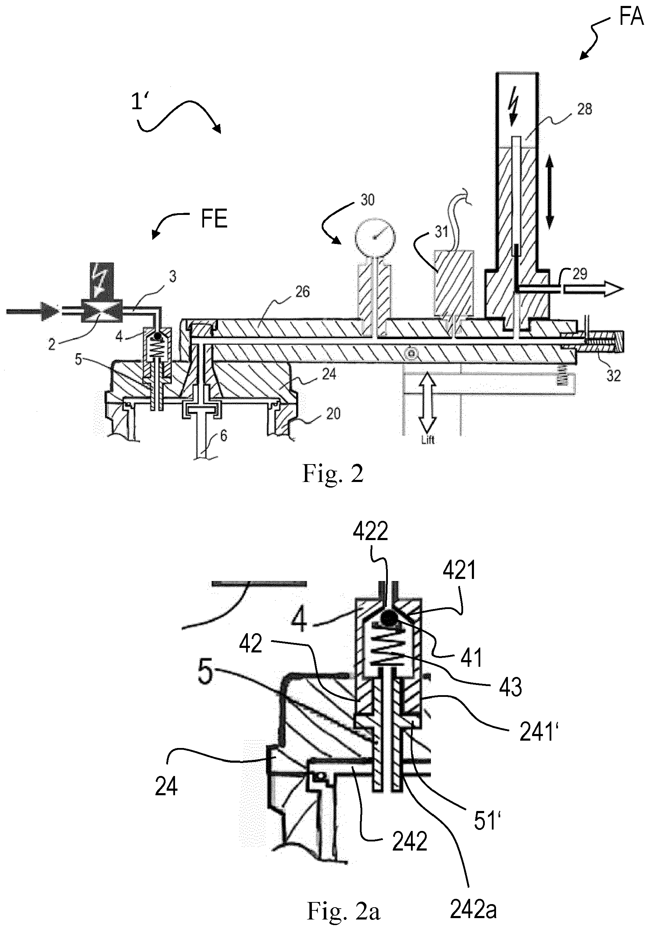

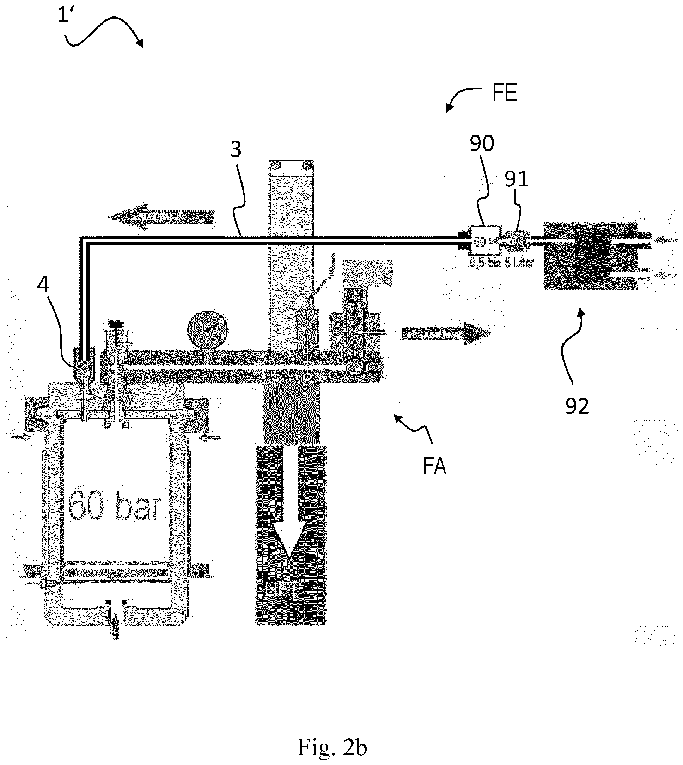

Figur 2 zeigt eine zweite Ausführungsform eines erfindungsgemäßen Druckbehälters 1'. Der Druckbehälter 1' entspricht im Wesentlichen dem zuvor beschriebenen Druckbehälter 1, sofern im Folgenden nicht anders beschreiben. Gleiche Merkmale sind mit gleichen Bezugszeichen angedeutet. Wie insbesondere Figur 2a erkennen lässt, ist das Rückschlagventil 4 in der zweiten Ausführungsform im Vergleich zur ersten Ausführungsform etwas anders angeordnet ist. Wie beispielhaft dargestellt, weist die Durchgangöffnung 241' eine Stufe auf, auf der das Rückschlagventil 4, vorzugsweise über dessen Gehäuse 41, aufliegt. Die Durchgangsöffnung 241' hat entlang ihrer Erstreckung somit nicht einen durchgängig gleichen, sondern einen sich ändernden Querschnitt, um die Stufe zu bilden. Anders gesagt erstreckt sich die Durchgangsöffnung 241' - hier in dem/der bzw. durch den/die Deckel/Deckelwand 24 - von der Vorderseite des Deckels 24 mit einer ersten Breite (beispielsweise einem Durchmesser) bis zu der Stufe und von der Stufe dann mit einer zweiten Breite (beispielsweise einem Durchmesser), die kleiner ist als die erste Breite, zur Rückseite des Deckels 24.

Das Rückschlagventil 4 kann direkt oder indirekt auf der Stufe aufliegen. In der in Figur 2 dargestellten Ausführungsform liegt das Rückschlagventil indirekt auf der Stufe auf, nämlich über den Flanschbereich 51' der Leitung 5. Der Flanschbereich 51' ist dabei zwischen den Enden der Leitung 5 vorgesehen. Ein zwischen dem Flanschbereich 51' und dem stromaufwärtigen Ende der Leitung 5 erstreckender Abschnitt kann sich dadurch optional in dem Gehäuse 41 des Rückschlagventils 4 erstrecken, wie insbesondere in Figur 2a erkennbar. In der in Figur 2 dargestellten Ausführungsform erstreckt sich die Leitung 5 nicht nur in dem weiteren Deckel 242, sondern auch in dem Deckel 24. Das Rückschlagventil 4 ist gemäß der zweiten Ausführungsform ferner so vorgesehen, dass der Dichtungssitz 421 zumindest teilweise außerhalb des Deckels 24, also beispielsweise oberhalb von diesem angeordnet ist. Dadurch steht das Rückschlagventil 4 von dem Deckel 24 hervor, was zum Beispiel für eine Montage des Rückschlagventils 4 von Vorteil ist.

Wie in Figur 2 dargestellt, kann die Abführleitung 26 ausgebildet sein, den Deckel 24 an- und abzuheben, um Unterteil 20 und Deckel 24 wahlweise voneinander zu trennen, um die Öffnung zum Zugriff auf die Reaktionskammer 22 freizugeben, oder miteinander zu verschließen, um vorgenannte Öffnung zu schließen. Die Abführleitung 26 kann beispielsweise Teil eines Hebe- oder Liftmechanismus sein. Stromaufwärts des Abführventils 28 können weitere mit der Abführleitung 26 strömungstechnisch verbundene Komponenten wie beispielsweise eine Druckanzeige 30 (vorzugsweise analog, insbesondere ein Manometer) und/oder eine Druckmessung 31 (vorzugsweise digital und insbesondere zur Erfassung des Druckes und Übertragung des so erfassten Druckes an die Steuereinrichtung) vorgesehen sein. Eine Notablassventil 32 kann strömungstechnisch mit der Abführleitung 26 verbunden sein, sodass bei einem Ausfall des Abführventils 28 das Fluid über das Notablassventil 32 abgelassen werden kann. Dadurch kann ein unerlaubt hoher Druck in der Reaktionskammer 22 verhindert werden. Die Abführleitung 26 kann also verschiedene Anschlüsse aufweisen, an denen unterschiedliche Sensoren anbringbar oder angebracht sind. Vorzugsweise ist die Abführleitung 26 starr und/oder massiv ausgebildet sein. Dies ist insbesondere von Vorteil, wenn die Abführleitung 26 gleichzeitig zum Anheben und/oder Absenken des Deckels 24 zur Anwendung kommt. Bevorzugt ist, wenn die Abführleitung 26 ein Rohr wie beispielsweise ein Vierkantrohr ist, also beispielsweise einen rechteckigen oder quadratischen Querschnitt aufweist.

Wie in Figur 2b dargestellt, kann der Fluid-Einlass FE stromaufwärts des Rückschlagventils 4 einen Pufferbehälter 90 aufweisen. Der Pufferbehälter 90 kann einen bestimmten Druck bewirken, beispielsweise im Bereich von 50 bis 70 bar, vorzugsweise 60 bar. Der Pufferbehälter 90 hat vorzugsweise ein Volumen von 0,5 bis 5 Liter. Vorzugsweise weist der Fluid-Einlass FE stromaufwärts des Pufferbehälters 90 ein weiteres Rückschlagventil 91 auf. Vorzugsweise weist der Fluid-Einlass FE stromaufwärts des weiteren Rückschlagventils einen Verdichter 92 wie beispielsweise einen Kompressor auf. Das weitere Rückschlagventil 91 ist dann so vorgesehen, dass es eine Strömung nur in Richtung von dem Verdichter 92 in den Pufferbehälter 90 zulässt.

Wie Figur 2b erkennen lässt, können Fluid-Einlass FE und Fluid-Auslass FA bezüglich des Druckbehälters 1' wenigstens teilweise auf derselben Seite vorgesehen sein, also in der Seitenansicht gesehen beispielsweise neben dem Unterteil 20. Der Fluid-Einlass FE kann so vorgesehen sein, dass dieser zusammen mit dem Fluid-Auslass FA, insbesondere der Abführleitung 26, angehoben oder abgesenkt wird.

Die Erfindung ist dabei nicht auf die zuvor beschriebenen Merkmale beschränkt. Insbesondere lassen sich alle zuvor beschriebenen Merkmale in beliebiger Weise miteinander kombinieren.

### Bezugszeichenliste:

- 1: Druckbehälter mit Fluid-, insbesondere Gaszufuhr (beispielsweise von Stickstoff, Argon und/oder Luft)
- 2: Elektrisches Zuführventil (verstellbar zwischen "AUF" und "ZU")
- 3: Leitung bzw. Druckgasleitung zum Rückschlagventil
- 4: Rückschlagventil (Spezialausführung) direkt im vorzugsweise aus Stahl bestehendem Druckdeckel
41 Schließelement
42 Gehäuse
421 Dichtungssitz
422 Öffnung
43 Elastisches Element
- 5: Leitung oder Zuführungsrohr mit Flansch
51 Flanschbereich
51' Flanschbereich
- 6: Handhabungsstruktur
- 7: Probenbehälter
- 8: Probenhalterung oder -korb zur Aufnahme mehrerer Probenbehälter
- 9: Magnet-Scheibe oder -Rührstab (vor allem geeignet für die organische Chemie)
- 10/18: Absorberscheibe
- 11: Drehscheibe mit Magneten
- 12/15: Strömungskanäle
- 13: Bodenteil des Druckbehälters
- 14: mikrowellentransparenter Einsatz
- 16: Löcher in Absorberscheibe
- 17: Absatz zum Auflegen der Absorberscheibe
- 19: Grundlast zur Wärmeübertragung
- 20: Unterteil
- 21: Mantel, beispielsweise als PTFE-Behälter (Innenauskleidung)
- 22: Reaktionskammer oder Gasraum
- 23: Schutzelement (oder Deckel), vorzugsweise lose aufliegend
- 24: Druckdeckel (auch Deckel oder Deckelwand), vorzugsweise bestehend aus Stahl
241 Durchgangsöffnung
241a Weitere Durchgangsöffnung
241' Durchgangsöffnung
242 Weiterer Deckel
242a Durchgangsöffnung
- 25: Weitere Durchgangsöffnung oder Auslassöffnung zum Ablassen des Gasdrucks nach Prozessende (nur in eine Richtung)
- 26: Abführleitung, zum Beispiels als Rohr oder Vierkantrohr mit verschiedenen Anschlüssen und Sensoren
- 27: Drucksicherungselement, insbesondere Berstscheibe (Sicherheits-Druckablass bei zu hohem Überdruck)
- 28: elektrisches Abführventil (öffnet kontrolliert den Fluid-Auslass nach Reaktionsende)
- 29: Ablassöffnung im Abführventil zum Ablassen des abgeführten Fluids (beispielsweise Gas) und damit zum Druckabbau insbesondere nach Reaktionsende
- 30: Druckanzeige (beispielsweise analog und/oder Manometer)
- 31: Druckmessung (beispielsweise digital)
- 32: Notablassventil
- 40: Zuführleitung
- 81: Befestigungsbereich für Probenhalterung
- 82: Erster Abschnitt des Befestigungsbereichs 81
- 83: Zweiter Abschnitt des Befestigungsbereichs 81
- 90: Pufferbehälter
- 91: Weiteres Rückschlagventil
- 92: Verdichter
- FE: Fluid-Einlass
- FA: Fluid-Auslass

## Patentansprüche

1. Druckbehälter (1, 1'), aufweisend
ein Unterteil (20) und einen Deckel (24), die miteinander verschließbar sind, um im miteinander verschlossenen Zustand eine Reaktionskammer (22) als Druckraum zum Auslösen und/oder Fördern chemischer und/oder physikalischer Druckreaktionen von in der Reaktionskammer (22) aufgenommenen Proben (P) allseitig zu umgeben, und
einen Fluid-Einlass (FE) mit einem Rückschlagventil (4) zum Zuführen eines Fluids in die Reaktionskammer (22), wobei das Rückschlagventil (4) sich zumindest teilweise in dem Deckel (24) erstreckt.

2. Druckbehälter (1, 1') nach Anspruch 1, wobei der Fluid-Einlass (FE) stromaufwärts des Rückschlagventils (4) ein Zuführventil (2) aufweist, das zwischen einer Offenstellung zum Zuführen des Fluids in die Reaktionskammer (22) und einer Schließstellung zum Stoppen des Zuführens des Fluids verstellbar ist, und/oder
wobei der Fluid-Einlass (FE) eine Fluidleitung (3) mit einem stromabwärtigen Ende aufweist, an dem das Rückschlagventil (4) vorgesehen und vorzugsweise befestigt ist, wobei die Fluidleitung (3) vorzugsweise ein stromaufwärtiges Ende aufweist, an dem das Zuführventil (2) vorgesehen ist, und/oder
wobei das Rückschlagventil (4) eingerichtet ist, die Zufuhr des Fluids in die Reaktionskammer (22) zu stoppen, sobald ein bestimmter Druck in der Reaktionskammer (22) erreicht ist.

3. Druckbehälter (1, 1') nach einem der vorhergehenden Ansprüche, wobei der Deckel (24) eine Durchgangsöffnung (241, 241') aufweist, in der das Rückschlagventil (4) aufgenommen und/oder befestigt ist, wobei die Befestigung vorzugsweise über Kraft - und/oder Formschluss erfolgt, beispielsweise über eine Schraubverbindung wobei vorzugsweise die Durchgangsöffnung (241') des Deckels eine Stufe aufweist, auf der das Rückschlagventil (4) direkt oder indirekt aufliegt.

4. Druckbehälter (1, 1') nach einem der vorhergehenden Ansprüche, wobei das Rückschlagventil (4) ein Schließelement (41) und ein Gehäuse (42) aufweist, wobei das Gehäuse (42) einen Dichtungssitz (421) mit einer Öffnung (422) aufweist, die durch das Schließelement (41) verschließbar ist, wobei das Gehäuse (42) sich zumindest teilweise in dem Deckel (24), beispielsweise in dessen Durchgangsöffnung (241, 241'), erstreckt.

5. Druckbehälter (1) nach Anspruch 4, wobei der Dichtungssitz (421) zumindest teilweise innerhalb des Deckels (24) vorgesehen ist, und/oder
wobei der Dichtungssitz (421) zumindest teilweise außerhalb des Deckels (24) vorgesehen ist, und/oder
wobei das Gehäuse (42) an dem Deckel (24) befestigt ist, beispielsweise über Form- und/oder Kraftschluss, vorzugsweise über eine Schraubverbindung, und/oder
wobei das Schließelement (41) zumindest teilweise kugelförmig ausgebildet ist, und/oder wobei das Rückschlagventil (4) ein elastisches Element (43) wie beispielsweise eine Feder aufweist, das derart angeordnet ist, dass dessen Rückstellkraft das Schließelement (41) in Richtung des Dichtungssitzes (42) spannt oder drückt.

6. Druckbehälter (1, 1') nach einem der vorhergehenden Ansprüche, ferner aufweisend einen stromabwärts des Rückschlagventils (4) und des Deckels (24) vorgesehenen weiteren Deckel (242), der eine Durchgangsöffnung (242a) aufweist, über die das aus dem Rückschlagventil (4) strömende Fluid in die Reaktionskammer (22) zuführbar ist wobei vorzugsweise der weitere Deckel (242) zumindest teilweise aus Kunststoff wie beispielsweise PTFE hergestellt ist.

7. Druckbehälter (1, 1') nach einem der vorhergehenden Ansprüche, ferner aufweisend einen in dem Unterteil (20) vorgesehenen Mantel (21), der die Reaktionskammer (22) zumindest teilweise begrenzt, wobei vorzugsweise zumindest ein Teil des weiteren Deckels (242), beispielsweise ein Flanschbereich, zwischen Mantel (21) und Deckel (24) vorgesehen ist,
wobei vorzugsweise der Mantel (21) zumindest teilweise aus Kunststoff wie beispielsweise PTFE hergestellt ist.

8. Druckbehälter (1, 1') nach einem der vorhergehenden Ansprüche, ferner aufweisend eine stromabwärts des Rückschlagventils (4) vorgesehene Leitung (5), über die das aus dem Rückschlagventil (4) strömende Fluid in die Reaktionskammer (22) zuführbar ist.

9. Druckbehälter (1, 1') nach Anspruch 8, wobei das Rückschlagventil (4) sich auf der Leitung (5) abstützt, und/oder
wobei die Leitung (5) sich in den Deckel (24) erstreckt und vorzugsweise zumindest teilweise in der Durchgangsöffnung (241) des Deckels (24) vorgesehen ist, und/oder
wobei die Leitung (5) sich in die Reaktionskammer (22) erstreckt, und/oder
wobei die Leitung (5) zumindest teilweise aus Kunststoff wie beispielsweise PTFE hergestellt ist, und/oder
wobei, wenn der Druckbehälter (1, 1') ferner den stromabwärts des Rückschlagventils (4) und des Deckels (24) vorgesehenen weiteren Deckel (242) aufweist, die Leitung (5) sich in dem weiteren Deckel (242) erstreckt und/oder zumindest teilweise in der Durchgangsöffnung (242a) des weiteren Deckels (242) vorgesehen ist, wobei die Leitung (5) sich vorzugsweise nicht in den Deckel (24) erstreckt.

10. Druckbehälter (1, 1') nach Anspruch 8 oder 9, wobei die Leitung (5) einen Flanschbereich (51, 51') aufweist, über den die Leitung (5) aufgenommen ist.

11. Druckbehälter (1) Anspruch 10,
wobei die Leitung (5)
• über den Flanschbereich (51) aufgenommen ist, indem der Flanschbereich (51) in oder auf dem weiteren Deckel (242), insbesondere auf einer Stufe, vorgesehen und vorzugsweise abgestützt ist, oder
• wobei die Leitung (5) über den Flanschbereich (51') aufgenommen ist, indem der Flanschbereich (51') in dem Deckel (24), insbesondere in dessen Durchgangsöffnung (241) oder auf der Stufe der Durchgangsöffnung (241), vorgesehen und vorzugsweise abgestützt ist,
und/oder
wobei die Leitung (5) sich zwischen zwei Enden erstreckt und der Flanschbereich (51, 51') an einem der Enden oder zwischen den Enden vorgesehen ist.

12. Druckbehälter (1, 1') nach einem der vorhergehenden Ansprüche, ferner aufweisend ein Schutzelement (23), das sich in der Reaktionskammer (22) zumindest teilweise zwischen einem oberen Bereich und einem unteren Bereich der Reaktionskammer (22) erstreckt, um den unteren Bereich zumindest teilweise abzudecken, wobei der Fluid-Einlass (FE) derart angeordnet ist, dass dieser auf das Schutzelement (23) gerichtet ist, sodass über den Fluid-Einlass (FE) der Reaktionskammer (22) zugeführtes Fluid zunächst in den oberen Bereich und dann in den unteren Bereich strömt, wobei die Leitung (5) sich vorzugsweise in den oberen Bereich erstreckt, und/oder wobei der weitere Deckel (242) den oberen Bereich vorzugsweise begrenzt.

13. Druckbehälter (1, 1') nach einem der vorhergehenden Ansprüche, ferner aufweisend einen Fluid-Auslass (FA) mit einem Abführventil (28), das zwischen einer Offenstellung zum Abführen eines Fluids aus der Reaktionskammer (22) und einer Schließstellung zum Stoppen des Abführens des Fluids aus der Reaktionskammer (22) verstellbar ist.

14. Druckbehälter (1, 1') nach Anspruch 13, ferner aufweisend eine Steuerungseinrichtung, die eingerichtet ist, den Fluid-Einlass (FE) und den Fluid-Auslass (FA) zu steuern,
wobei die Steuerungseinrichtung vorzugsweise eingerichtet ist, den Fluid-Einlass (FE), insbesondere das Zuführventil (2), derart zu steuern, dass nach dem Wechsel des Abführventils (28) in die Schließstellung die Reaktionskammer (2) mittels des über den Fluid-Einlass (FE) zugeführten Fluids unter Druck gesetzt wird,
wobei die Steuerungseinrichtung vorzugsweise eingerichtet ist, das Abführventil (28) in dessen Offenstellung zu überführen, um mittels des über den Fluid-Einlass (FE) zugeführten und anschließend über das Abführventil (28) abgeführten Fluids die Reaktionskammer (22) zu spülen,
vorzugsweise ferner aufweisend einen Sauerstoffsensor zum Erfassen eines Sauerstoffgehalts in der Reaktionskammer (22), wobei die Steuerungseinrichtung eingerichtet ist, den Fluid-Einlass (FE) und das Abführventil (28) auf Basis des von dem Sauerstoffsensor erfassten Sauerstoffgehalts zu steuern,
wobei die Steuerungseinrichtung besonders vorzugsweise eingerichtet ist, den Fluid-Einlass (FE) und das Abführventil (28) derart zu steuern, dass über das in der Offenstellung befindliche Zuführ- und Abführventil (2, 28) die Reaktionskammer (22) gespült wird und wenigstens das Abführventil (28) von der Offenstellung in die Schließstellung wechselt, sobald ein vorbestimmter Sauerstoffgehalt unterschritten wird.

15. Druckbehälter (1, 1') nach einem der vorhergehenden Ansprüche, wobei der Deckel (24) zumindest teilweise aus Stahl wie beispielsweise NiCr21Mo14W hergestellt ist, und/oder wobei das Unterteil (20) zumindest teilweise aus Stahl wie beispielsweise NiCr21Mo14W hergestellt ist, und/oder
wobei das Rückschlagventil (4), vorzugsweise dessen Schließelement (41) und/oder Gehäuse (42), zumindest teilweise aus Stahl wie beispielsweise NiCr21Mo14W hergestellt ist.
